# FASCICULE DE BREVET EUROPEEN

(11) **EP 3 693 624 B1**
(45) Date de publication et mention de la délivrance du brevet: **22.09.2021**
(21) Numéro de dépôt: 20155311.2
(22) Date de dépôt: 04.02.2020
(51) Int. Cl.: F16B 45/00, F16B 45/04

(54) **MAILLON RAPIDE A OBTURATEUR**
SCHNELLVERSCHLUSSGLIED
QUICK LINK WITH SHUTTER

(30) Priorité: 07.02.2019 FR 1901201
(43) Date de publication de la demande: 12.08.2020
(73) Titulaire: Zedel, 38920 Crolles (FR)
(72) Inventeur: MAURICE, Alain, 38660 Saint Hilaire du Touvet (FR); JOURDAN, Marc, 38400 Saint Martin d'Hères (FR)
(74) Mandataire: Talbot, Alexandre

(56) Documents cités:
- EP-A1- 2 243 972
- WO-A1-2015/132578
- JP-A- 2001 208 034

## Description

### Domaine technique

L'invention concerne un maillon rapide muni d'un obturateur amovible.

### Technique antérieure

Dans de nombreuses activités acrobatiques ou de montagne, il est classique d'utiliser un maillon rapide pour fixer un outil ou tout autre élément à un point fixe. Le maillon rapide est ouvert de manière à introduire le point de fixation à l'intérieur de l'anneau. Le maillon rapide est ensuite refermé pour former un point de fixation.

L'outil ou un autre élément utile est introduit à l'intérieur de l'anneau de manière à ce que le maillon rapide forme une connexion mécanique entre l'outil et le point fixe. En utilisation, les sollicitations procurées sur le maillon rapide évoluent en intensité et en orientation. Il en ressort que le maillon rapide bouge, tourne et se retourne. Le maillon rapide ne travaille pas toujours selon son grand axe et/ou les différents éléments introduits dans l'anneau viennent en contact les uns des autres et ne restent pas dans la position désirée.

De manière classique, une portion courbée du maillon rapide est en contact avec un point de fixation métallique alors que l'autre partie courbée est en contact d'un élément plus tendre, par exemple un élément textile tel qu'une corde ou une sangle. Si au cours de la vie du maillon rapide, ce dernier se retourne, la portion courbée de l'anneau qui a été en contact de la pièce métallique et qui possède un état de surface devenu rugueux se trouve alors en contact de l'élément textile ce qui peut détériorer plus rapidement l'élément textile.

Des observations des configurations de l'art antérieur, il ressort qu'il est avantageux de sécuriser le fonctionnement des maillons rapides.

Un maillon d'attache ayant un verrou est connu de EP 2 243 972 A1.

Dans les mousquetons, il est connu d'intégrer un élément de blocage qui permet de bloquer le doigt et ainsi d'empêcher son ouverture non intentionnelle. Il est possible de citer le document GB 2481800. Il est également connu du document WO2015132578 d'installer un insert dans une manille afin de combler l'espace qui existe dans l'insert et ainsi éviter d'introduire un élément de connexion additionnel. Enfin, il est connu du document US2018283439 de clipper sur un mousqueton un restricteur qui délimite l'espace intérieur du mousqueton pour définir deux zones de fixation et qui interdit l'ouverture du doigt du mousqueton. Toutes ces solutions ne sont pas transposables à un maillon rapide dont le fonctionnement est différent.

### Objet de l'invention

L'invention a pour but de remédier à ces inconvénients et, plus particulièrement, de fournir un maillon rapide dans lequel les risques de faire travailler le maillon rapide autrement que selon son grand axe sont réduits.

Selon l'invention, ce but est atteint par un maillon rapide comprenant :
- un corps définissant un maillon ouvert avec des première et deuxième extrémités opposées, le corps comportant une portion centrale séparant deux portions courbées;
- une bague de verrouillage montée rotative et coulissante par rapport au corps, la bague de verrouillage définissant une position de fermeture reliant les première et deuxième extrémités opposées du corps pour fermer le maillon rapide et une position d'ouverture dans laquelle la bague de verrouillage est espacée de la première extrémité du corps pour définir un maillon ouvert avec une longueur,
- un obturateur monté amovible par rapport au corps, l'obturateur ayant un première extrémité fixée à la portion centrale par un moyen de fixation et ayant une deuxième extrémité opposée coopérant à la bague de verrouillage ou au corps par un système de blocage, le moyen de fixation autorisant une rotation de l'obturateur par rapport au corps, le système de blocage coopérant avec le corps et/ou la bague de verrouillage pour empêcher ladite rotation.

Le maillon rapide est remarquable en ce que :
- le moyen de fixation et le système de blocage sont formés indépendamment par un anneau ou un crochet,
- le système de blocage possède une longueur inférieure à la longueur d'ouverture selon l'axe de glissement pour autoriser la rotation de l'obturateur entre la bague de verrouillage et la première extrémité du corps lorsque la bague de verrouillage est dans la position d'ouverture et deux bloqueurs espacées l'un de l'autre pour former des butées empêchant la rotation de l'obturateur lorsque la bague de verrouillage est dans la position de fermeture.

Préférentiellement, le système de blocage et le moyen de fixation sont formés chacun par un anneau.

Selon un développement de l'invention, l'obturateur définit un premier anneau ayant une section autorisant l'insertion du corps et interdisant l'insertion de la bague de verrouillage et un deuxième anneau autorisant l'insertion de la bague de verrouillage.

Selon un développement de l'invention, le système de blocage et le moyen de fixation sont formés chacun par un crochet.

Avantageusement, l'obturateur est monté mobile en translation selon la direction de glissement de la bague de verrouillage.

Selon un développement de l'invention, le moyen de fixation recouvre partiellement la bague de verrouillage selon la direction de glissement de la bague de verrouillage.

Selon un autre développement de l'invention, l'obturateur possède une tige dirigée vers une des portions courbées du corps et faisant saillie du moyen de fixation et du système de blocage.

Selon un développement de l'invention, l'obturateur définit une butée de blocage configurée pour bloquer le déplacement de la bague de verrouillage selon l'axe de glissement.

### Description sommaire des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
- la figure 1 illustre, de manière schématique, en perspective, un premier mode de réalisation d'un maillon rapide fermé avec l'obturateur dans la position de blocage;
- la figure 2 illustre, de manière schématique, en perspective, un deuxième mode de réalisation d'un maillon rapide fermé avec l'obturateur dans la position de blocage;
- la figure 3 illustre, de manière schématique, en perspective, un troisième mode de réalisation d'un maillon rapide fermé avec l'obturateur dans la position de blocage;
- la figure 4 illustre, de manière schématique, en perspective, un obturateur;
- la figure 5 illustre, de manière schématique, en perspective, une première étape de montage d'un obturateur selon la figure 4 sur un maillon rapide ;
- la figure 6 illustre, de manière schématique, en perspective, une deuxième étape de montage d'un obturateur selon la figure 4 sur un maillon rapide, l'obturateur étant fixé au corps dans la portion rectiligne;
- la figure 7 illustre, de manière schématique, en perspective, une troisième étape de montage de l'obturateur selon la figure 4 dans le maillon rapide, l'obturateur étant fixé au corps dans la portion rectiligne et tourné pour venir face à la bague de verrouillage;
- la figure 8 illustre, de manière schématique, en perspective, en perspective, une première étape de montage d'une deuxième configuration d'obturateur sur un maillon rapide,
- la figure 9 illustre, de manière schématique, en perspective, en perspective, une deuxième étape de montage de la deuxième configuration d'obturateur sur un maillon rapide, l'obturateur étant installé à une extrémité du corps,
- la figure 10 illustre, de manière schématique, en perspective, en perspective, une troisième étape de montage de la deuxième configuration d'obturateur sur un maillon rapide, l'obturateur étant installé dans la portion rectiligne du corps,
- la figure 11 illustre, de manière schématique, en perspective, une quatrième étape de montage de la deuxième configuration d'obturateur sur un maillon rapide, l'obturateur étant fixé au corps dans la portion rectiligne et tourné pour venir face à la bague de verrouillage,
- la figure 12 illustre, de manière schématique, en perspective, en perspective, une cinquième étape de montage où le maillon est fermé,
- la figure 13 illustre, de manière schématique, en perspective, en perspective, une étape de montage d'une troisième configuration d'obturateur sur un maillon rapide triangulaire,
- la figure 14 illustre, de manière schématique, en perspective, en perspective, la troisième configuration d'obturateur illustrée à la figure 13.

### Description des modes de réalisation

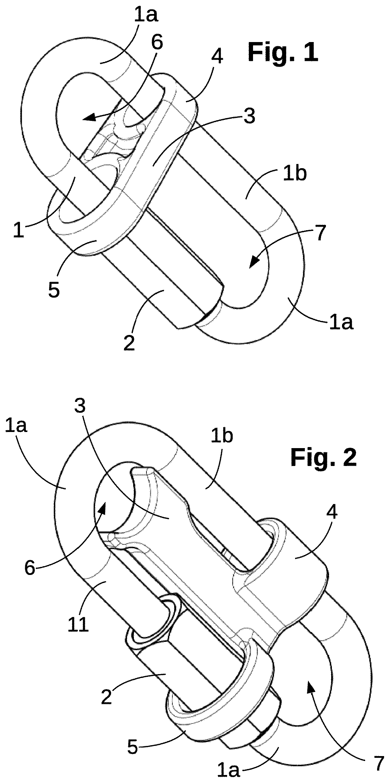

Les figures 1, 2 et 3 illustrent trois modes de réalisation différents d'un maillon rapide qui comporte un corps 1 associé à une bague de verrouillage 2. Le corps 1 définit un maillon ouvert muni de deux extrémités distinctes et espacées dont au moins une des extrémités est associée à la bague de verrouillage 2 pour assurer la fermeture par vissage. Le corps 1 et la bague de verrouillage 2 définissent un anneau. L'anneau peut être de forme quelconque. Les figures 1, 2 et 3 illustrent un anneau ayant une forme sensiblement ovale. Cependant, il est également possible d'avoir un anneau ayant une forme sensiblement triangulaire.

Le maillon rapide comporte une pluralité de portions courbées 1a, par exemple deux ou trois portions courbées 1a qui sont reliées par au moins une portion centrale 1b et une portion d'ouverture qui définit l'ouverture du maillon rapide.

Dans le mode de réalisation illustré aux figures 1, 2 et 3, l'anneau définit deux portions rectilignes en vis-à-vis reliées par deux portions arrondies ou courbées 1a, par exemple deux arcs de cercle. La distance séparant les deux portions arrondies est supérieure à la distance séparant les deux sections rectilignes. Le maillon rapide possède un grand axe reliant les deux portions courbées et un petit axe reliant la portion rectiligne à la bague de verrouillage. Le corps 1 définit les deux portions courbées 1a et la portion rectiligne 1b.

La bague de verrouillage 2 est montée mobile par rapport au corps 1. La bague de verrouillage 2 coulisse le long du corps 1 par vissage pour ouvrir et fermer l'anneau. La bague de verrouillage 2 se déplace selon un axe de coulissement. Le corps 1 et la bague de verrouillage 2 forment un anneau fermé lorsque la bague de verrouillage 2 est dans la position fermée. Lorsque la bague de verrouillage 2 est dans la position d'ouverture, le maillon rapide définit un maillon ouvert. Dans la position d'ouverture, le maillon est ouvert avec une longueur d'ouverture prédéfinie. La longueur d'ouverture est mesurée selon l'axe de coulissement.

Le maillon rapide définit une section de coupe médiane qui est avantageusement un plan de symétrie. Dans la section de coupe médiane, le maillon rapide définit un anneau. La section de coupe médiane sépare une face supérieure et une face inférieure de l'anneau. La section de coupe passe au travers de la portion rectiligne, des deux portions courbées et de la bague de verrouillage. De manière avantageuse, les portions courbées sont des portions de tore. L'axe de révolution est avantageusement perpendiculaire au plan de coupe.

La bague de verrouillage 2 possède un filetage qui coopère avec un filetage 1c d'une extrémité du corps 1 pour déplacer la bague 2 par rapport au corps 1 et verrouiller le maillon rapide dans la position fermée. La bague de verrouillage 2 possède une forme externe non circulaire afin de coopérer avec un outil. La section externe de la bague de verrouillage 2 est plus grande que la section externe du corps. A titre d'exemple, la section externe de la bague de verrouillage 2 peut être triangulaire, carrée, rectangulaire, hexagonale, octogonale ou d'une autre forme. La bague de verrouillage 2 n'est pas pivotante pour se rapprocher ou s'éloigner de la portion rectiligne 1b.

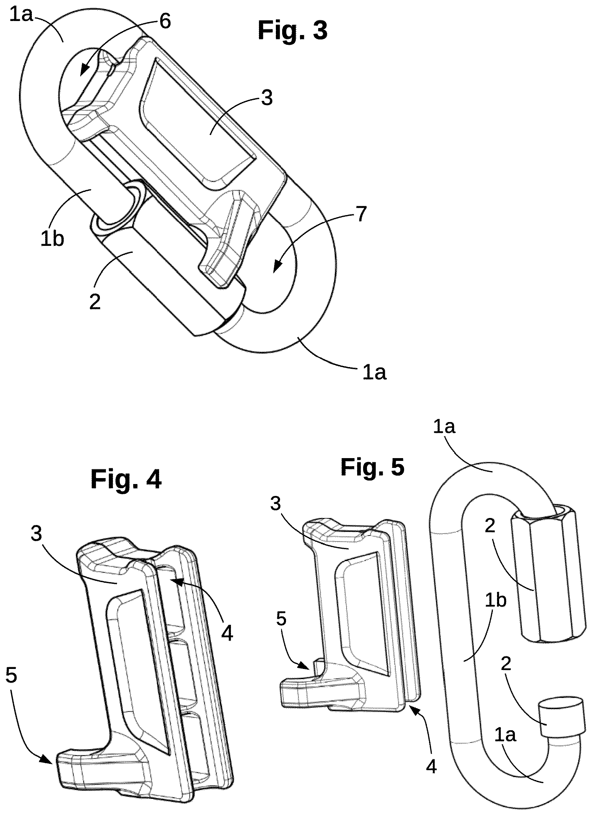

Le fonctionnement du maillon rapide est très simple : le maillon étant ouvert (cas des figures 5, 6, 7, 8, 9, 10, 11 ou 13), on fait coulisser la bague 2 vers extrémité filetée du corps 1 pour fermer le corps 1 et définir l'anneau fermé comme cela est illustré aux figures 1, 2 et 3. On fait tourner la bague 2 sur elle-même, dans un sens, de sorte que les filetages glissent l'un sur l'autre pour fermer et verrouiller le maillon rapide. La distance entre la bague de verrouillage 2 et la portion rectiligne 1b est constante, car la bague de déplace en translation et non par pivotement comme dans un mousqueton ce qui facilite l'utilisation de la partie interne de l'anneau.

Le maillon définit une portion rectiligne qui autorise le glissement de la bague de verrouillage 2 entre la position d'ouverture et la position de fermeture. Le maillon peut posséder d'autres sections rectilignes 1b formées intégralement par le corps 1. Une section rectiligne peut posséder un axe longitudinal qui est parallèle à l'axe de glissement de la bague 2.

Le maillon rapide comporte un obturateur 3 qui est monté amovible par rapport au corps 1. L'obturateur 3 remplit une partie de l'espace se trouvant à l'intérieur de l'anneau. L'obturateur 3 comporte un moyen de fixation 4 qui est configuré pour fixer l'obturateur 3 avec la portion centrale 1b du corps 1. Le moyen de fixation 4 coopère avec la section centrale 1b du corps 1 pour autoriser la rotation de l'obturateur 3 autour de l'axe longitudinal de la portion centrale 1b.Le moyen de fixation est formé à une extrémité de l'obturateur 3.

L'obturateur 3 définit un anneau configuré pour entourer la portion centrale 1b. L'anneau autorise la rotation de l'obturateur 3 autour de la portion centrale 1b. En alternative, l'obturateur 3 définit un crochet autour de la portion centrale 1b.

L'obturateur 3 comporte également un système de blocage 5 sous la forme d'un anneau ou d'un crochet qui coopère avec la bague de verrouillage 2 ou le corps notamment dans la portion d'ouverture.

Le système de blocage 5 est configuré de manière à autoriser la rotation de l'obturateur 3 autour de la portion centrale 1b lorsque le maillon rapide est ouvert et pour empêcher la rotation de l'obturateur 3 autour de la portion centrale lorsque le maillon rapide est fermé. En d'autres termes, la bague de verrouillage 2 coopère avec le système de blocage 5 pour empêcher la rotation de l'obturateur 3 lorsque la bague de verrouillage 2 est dans la position de fermeture et pour autoriser la rotation de l'obturateur 3 lorsque la bague de verrouillage 2 est dans la position d'ouverture. L'obturateur 3 n'est pas configuré pour empêcher la rotation de la bague de verrouillage 2, ni pour empêcher le déplacement de la bague de verrouillage 2 selon l'axe de glissement. En d'autres termes, lorsque l'obturateur 3 est fixé au corps 1 et que le maillon rapide est fermé, l'obturateur 3 autorise la rotation de la bague de verrouillage 2 ainsi que son coulissement vers la position d'ouverture.

Le système de blocage 5 possède une longueur inférieure à la longueur d'ouverture du maillon de manière à autoriser la rotation de l'obturateur 3 lorsque la bague de verrouillage 2 est dans la position d'ouverture. L'obturateur 3 peut tourner autour de la portion centrale et passer à travers de l'ouverture. Au contraire, lorsque la bague de verrouillage 2 est dans la position de fermeture, la bague de verrouillage 2 forme une butée qui empêche la rotation.

L'obturateur 3 possède deux bloqueurs qui sont espacés l'un de l'autre de manière à autoriser l'insertion de la bague de verrouillage 2 entre les deux bloqueurs. Les deux bloqueurs viennent en butée contre la bague 2 ce qui bloque la rotation. Lorsque la bague 2 est dans sa position de fermeture, il est impossible de démonter l'obturateur 3.

L'obturateur 3 est une pièce rigide ou suffisamment rigide pour interdire sa déformation afin de se fixer ou de se désolidariser du corps 1.

Selon les modes de réalisation, le système de blocage 5 entoure partiellement ou complètement la bague de verrouillage 2, dans un plan de coupe perpendiculaire à l'axe de glissement, pour interdire la rotation de l'obturateur 3 par rapport au corps 1. Le système de blocage 5 peut être formé par un anneau avec les deux bloqueurs qui se rejoignent comme cela est illustré aux figures 1, 2 8, 9, 10, 11 et 12 ou par un crochet indépendamment de la configuration retenue pour former le moyen de fixation 4 comme cela est illustré aux figures 3, 4, 5, 6, 7, 13 et 14. Les deux éléments en saillie formant les bloqueurs font partie de l'anneau ou du crochet.

Dans sa position de verrouillage, l'obturateur 3 est en contact avec la portion centrale 1b et il est également en contact avec la bague de verrouillage 2. L'obturateur 3 relie la section centrale 1b avec la bague de verrouillage 2 ce qui permet de définir deux zones dissociées 6 et 7 dans la partie interne de l'anneau. Les deux zones dissociées 6 et 7 sont séparées par l'obturateur 3 ce qui complique un déplacement du maillon rapide sous charge. L'obturateur 3 empêche également que deux éléments installés initialement aux deux sections courbées de l'anneau, c'est-à-dire dans les zones 6 et 7 puissent entrer en contact.

Il est connu des systèmes de blocage d'un connecteur en triangle qui sont montés pivotants sur le corps (PETZL DELTA). Le pivotement du système de blocage permet de basculer entre une position autorisant l'ouverture du connecteur et une position empêchant l'ouverture du connecteur. Cependant, cette configuration n'est pas intéressante car, dans son utilisation, le système de blocage est mis sous contrainte ce qui peut se traduire par son pivotement depuis la position de blocage jusqu'à la position autorisant l'ouverture. Une fois cette position atteinte, le système de blocage devient inefficace. Le connecteur peut tourner et le système de blocage qui fait saillie est rapidement cassé ou désolidarisé.

Dans les différents modes de réalisation illustrés, le démontage de l'obturateur 3 n'est possible que lorsque la bague de verrouillage 2 est dans la position ouverte. Le déplacement de la bague de verrouillage 2 permet de supprimer le point de blocage procuré par la bague de verrouillage 2 sur les bloqueurs 5 ce qui autorise la rotation de l'obturateur 3 puis sa désolidarisation du corps 1 par exemple par glissement de l'obturateur 3 le long du corps 1 pour atteindre l'intervalle libre entre les deux extrémités du corps 1.

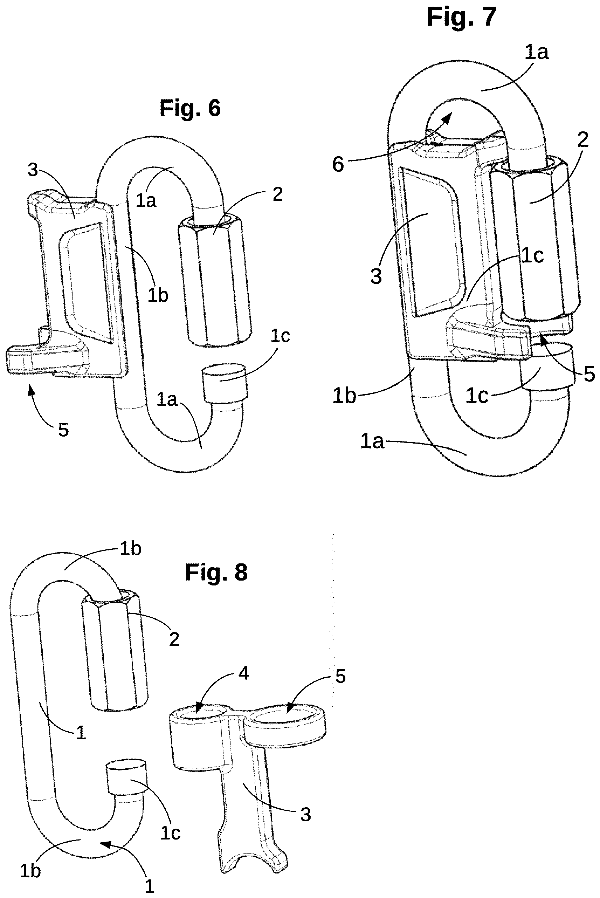

Comme illustré aux figures 1 et 2, cette solution peut être obtenue en utilisant un obturateur 3 qui définit deux anneaux disjoints entourant respectivement la section rectiligne 1b et la bague de verrouillage 2 dans la position de fermeture. Il est également possible d'obtenir un tel résultat en utilisant un anneau associé à un crochet ou encore en utilisant deux crochets comme illustré aux figures 3 et 7. Les zones d'ouverture des crochets sont agencées pour interdire la rotation, par exemple en disposant les zones d'ouverture des crochets pour laisser libre la partie externe de la portion rectiligne et la partie externe de la bague de verrouillage. Les crochets ne sont pas configurés comme des clips. Les crochets peuvent être formé dans un matériau suffisamment rigide pour empêcher la déformation et n'autoriser l'introduction de la bague de verrouillage que selon l'axe de glissement. Il est également possible de prévoir que la zone libre du crochet est incompatible avec le clippage par pivotement.

Dans une configuration à deux crochets coopérant avec la portion centrale 1b et la bague de verrouillage 2, comme cela est illustré aux figures 3 à 7, les deux crochets sont avantageusement configurés pour ne pas recouvrir la paroi externe de l'anneau et recouvrir les restes de la section de la portion centrale 1b et de la bague de verrouillage. Il est plus avantageux d'utiliser un système de blocage 5 sous la forme d'un crochet que sous la forme d'un anneau car l'utilisateur voit mieux la fermeture du maillon rapide ce qui est un gage de sécurité.

Dans un mode de réalisation particulier illustré aux figures 8 à 11, l'obturateur 3 définit deux anneaux distincts. Le premier anneau entoure la section centrale 1b du corps 1 et le deuxième anneau entoure la bague de verrouillage 2. L'obturateur 3 peut se déplacer selon l'axe de translation de la bague 2 lorsque la bague 2 est dans la position de fermeture.

De manière avantageuse, le premier anneau définit un orifice ayant une section inférieure à la section du deuxième anneau de sorte que l'introduction de la bague de verrouillage 2 dans le premier anneau soit impossible. La section du premier anneau autorise l'insertion du corps 1.

Les deux anneaux autorisent le déplacement de l'obturateur 3 selon l'axe de translation. Ce qui est présenté pour deux anneaux est également applicable pour un anneau et un crochet ou deux crochets. Un des crochets peut passer autour du corps sans pouvoir passer autour de la bague de verrouillage 2.

De manière avantageuse, l'obturateur 3 possède une tige disposée entre les deux anneaux/crochets et dirigée vers une des portions courbées du corps. La tige permet de limiter la section 6 ou la section 7 ce qui limite les possibilités de déplacement des éléments et outils dans l'anneau. Il est alors plus difficile pour le maillon rapide de tourner et se retourner. Il est plus difficile de faire travailler le maillon rapide autrement que selon son grand axe.

Dans un mode de réalisation particulier, la longueur du bloqueur 5 est inférieure à la longueur de la bague de verrouillage selon l'axe de glissement. Cette configuration permet de ne pas gêner l'actionnement de la bague 2.

De manière avantageuse, l'obturateur 3 est configuré pour qu'une partie courbée du corps 1 forme une butée bloquant l'obturateur 3 autour de la bague de verrouillage. Préférentiellement, la forme de l'obturateur 3 est choisie pour coopérer avec le corps 1 de sorte que le système de blocage 5 soit toujours en contact avec la bague de verrouillage lorsque la bague est fermée.

De manière avantageuse, la longueur du bloqueur selon l'axe de glissement correspond à au moins 50% de la distance séparant les deux extrémités du corps, préférentiellement au moins 75% de manière à avoir une ouverture complète ou quasi complète du maillon pour réussir à sortir le bloqueur 5 aisément.

Préférentiellement, la longueur de l'obturateur 3 selon l'axe de glissement est au moins égale à 50% de la longueur du grand axe du maillon.

La figure 4 illustre un mode de réalisation d'un obturateur 3 muni de deux crochets définissant le système de fixation 4 et le système de blocage 5. Dans l'exemple illustré, le système de fixation 4 est sous la forme d'une rainure. Le système de fixation peut être inséré au corps par clippage, c'est-à-dire par déformation légère de l'obturateur comme illustré à la figure 5.

L'obturateur 3 est fixé à la partie centrale 1b ce qui autorise sa rotation. Comme illustré à la figure 6, la bague de verrouillage est dans sa position d'ouverture ce qui autorise la rotation de l'obturateur 3 par rapport au corps. La rotation peut être complète, c'est-à-dire sur 360°.

Comme illustré à la figure 7, l'obturateur est tourné de manière à ce que la bague 2 se situe entre les deux bloqueurs dans le prolongement de l'axe de coulissement. Une fois l'obturateur 3 installé, la bague de verrouillage 2 est vissée pour fermer le maillon rapide ce qui empêche le démontage de l'obturateur 3. Lorsque le maillon est fermé, L'obturateur 3 peut se déplacer en translation selon l'axe de glissement et éventuellement en rotation selon le jeu fonctionnel défini par le système de blocage par rapport au corps 1 ou à la bague de verrouillage 2.

Les figures 8, 9, 10 et 11 représentent différentes étapes de montage de l'obturateur 3 sur le corps 1. La figure 8 illustre un corps 1 dissocié de l'obturateur 3. La bague de verrouillage 2 est dans sa position d'ouverture.

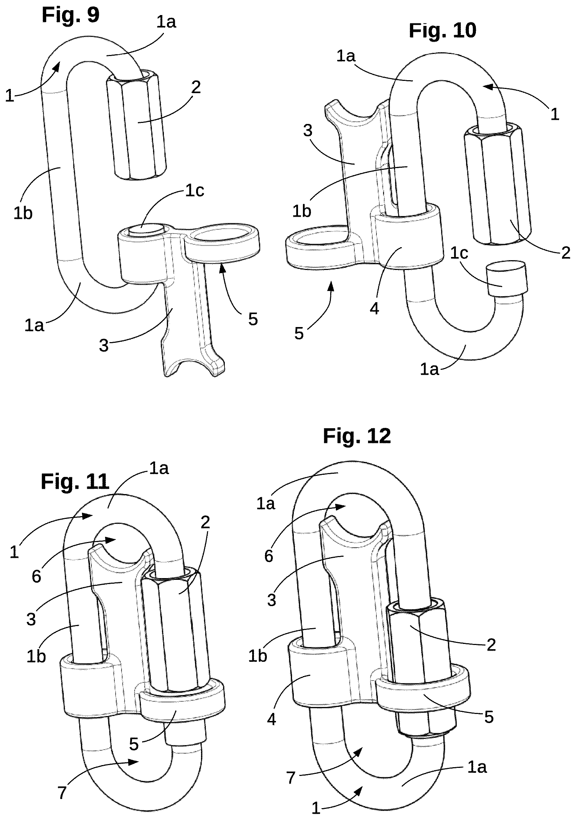

La figure 9 illustre le montage du système de fixation sur une extrémité du corps 1. Ensuite, comme illustré à la figure 10, l'obturateur 3 glisse le long du corps 1 de manière à installer le bloqueur du système de blocage 5 face à l'espace qui sépare les deux extrémités du corps 1 perpendiculairement à l'axe de glissement de la bague 2. L'obturateur 3 se déplace en rotation de manière à placer le bloqueur du système de blocage 5 dans le prolongement de l'extrémité du corps 1 qui maintient la bague de verrouillage 2 et selon l'axe de glissement (figure 11). Une fois l'obturateur 3 mis en place, la bague de verrouillage 2 est déplacée de manière à fermer le maillon rapide (figure 2). La bague de verrouillage 2 passe à travers le bloqueur du système de blocage 5 ce qui empêche la rotation de l'obturateur 3 autour la portion rectiligne du corps 1.

Dans un mode de réalisation illustré, l'obturateur 3 définit une butée de fin de course qui limite le déplacement de la bague de verrouillage 2.

Lorsque le moyen de fixation 4 est sous la forme d'un anneau, l'anneau 4 et au moins une des portions courbées 1a sont configurés pour autoriser le glissement de l'anneau 4 depuis l'ouverture du corps 1 jusqu'à la portion rectiligne 1b.

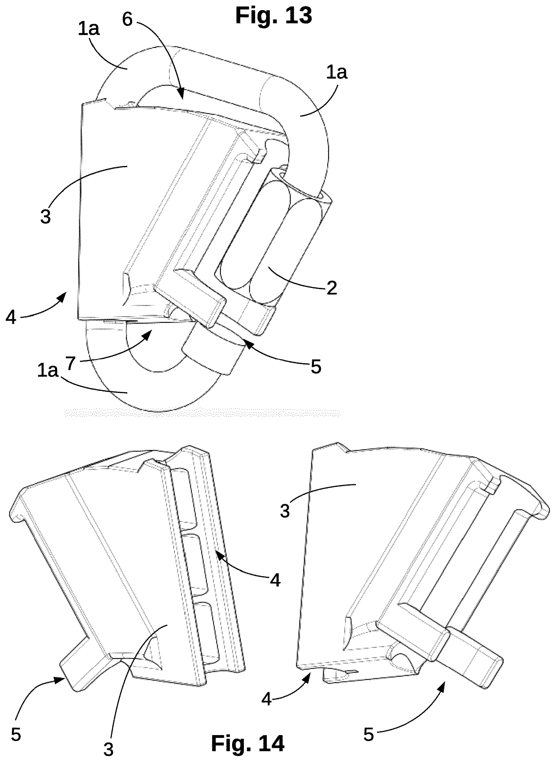

Les figures 13 et 14 illustrent un autre mode de réalisation avec un maillon rapide sous la forme d'un triangle. La forme de l'obturateur 3 est adaptée à la forme du maillon de manière à pouvoir s'installer sur le corps 1 et que le bloqueur du système de blocage 5 puisse coopérer avec la bague 2. Le fonctionnement de ce mode de réalisation est identique à celui illustré aux figures 4 à 7. La figure 14 représente les deux faces opposées de l'obturateur 3 avec deux crochets dont un sous la forme d'une rainure et définissant le moyen de fixation 4 et le système de blocage 5.

## Revendications

1. Maillon rapide comprenant :
- un corps (1) définissant un maillon ouvert avec des première et deuxième extrémités opposées, le corps (1) comportant une portion centrale (1b) séparant deux portions courbées (1a);
- une bague de verrouillage (2) montée rotative et coulissante par rapport au corps (1), la bague de verrouillage (2) définissant une position de fermeture reliant les première et deuxième extrémités opposées du corps (1) pour fermer le maillon rapide et une position d'ouverture dans laquelle la bague de verrouillage (2) est espacée de la première extrémité du corps (1) pour définir un maillon ouvert avec une longueur d'ouverture mesurée selon l'axe de coulissement de la bague de verrouillage (2);
- un obturateur (3)
**caractérisé en ce que**
- l'obturateur (3) est monté amovible par rapport au corps (1), l'obturateur (3) ayant une première extrémité fixée à la portion centrale (1b) par un moyen de fixation (4) et ayant une deuxième extrémité opposée coopérant à la bague de verrouillage (2) ou au corps (1) par un système de blocage (5), le moyen de fixation (4) autorisant une rotation de l'obturateur (3) par rapport au corps (1), le système de blocage (5) coopérant avant le corps (1) et/ou la bague de verrouillage (2) pour empêcher ladite rotation,
- le moyen de fixation (4) et le système de blocage (5) sont formés indépendamment par un anneau ou un crochet,
- le système de blocage (5) possède une longueur inférieure à la longueur d'ouverture selon l'axe de glissement pour autoriser la rotation de l'obturateur (3) entre la bague de verrouillage et la première extrémité du corps lorsque la bague de verrouillage (2) est dans la position d'ouverture et deux bloqueurs espacées l'un de l'autre pour former des butées empêchant la rotation de l'obturateur (3) lorsque la bague de verrouillage (2) est dans la position de fermeture.

2. Maillon rapide selon la revendication 1, **caractérisé en ce que** le système de blocage (5) et le moyen de fixation (4) sont formés chacun par un anneau.

3. Maillon rapide selon la revendication précédente, dans lequel l'obturateur (3) définit un premier anneau ayant une section autorisant l'insertion du corps (1) et interdisant l'insertion de la bague de verrouillage (2) et un deuxième anneau autorisant l'insertion de la bague de verrouillage (2).

4. Maillon rapide selon la revendication 1, **caractérisé en ce que** le système de blocage (5) et le moyen de fixation (4) sont formés chacun par un crochet.

5. Maillon rapide selon l'une des revendications précédentes, **caractérisé en ce que** l'obturateur (3) est monté mobile en translation selon la direction de glissement de la bague de verrouillage (2).

6. Maillon rapide selon l'une des revendications précédentes, **caractérisé en ce que** le système de blocage (5) recouvre partiellement la bague de verrouillage (2) selon la direction de glissement de la bague de verrouillage (2).

7. Maillon rapide selon l'une des revendications précédentes, **caractérisé en ce que** l'obturateur (3) possède une tige dirigée vers une des portions courbées du corps (1) et faisant saillie du moyen de fixation (4) et du système de blocage (5).

8. Maillon rapide selon l'une des revendications précédentes, dans lequel l'obturateur (3) définit une butée de blocage configurée pour bloquer le déplacement de la bague de verrouillage (2) selon l'axe de glissement, la butée de blocage étant disposée entre le moyen de fixation (4) et le système de blocage (5) et s'étendant parallèlement à l'axe de glissement.

## Patentansprüche

1. Schnellverschlussglied, das umfasst:
- einen Körper (1), der ein offenes Glied mit einem ersten und einem zweiten gegenüberliegenden Ende definiert, wobei der Körper (1) einen zentralen Abschnitt (1b) umfasst, der zwei gekrümmte Abschnitte (1a) trennt;
- einen Verriegelungsring (2), der drehend und gleitend in Bezug auf den Körper (1) montiert ist, wobei der Verriegelungsring (2) eine Verschlussposition definiert, die das erste und das zweite gegenüberliegende Ende des Körpers (1) verbindet, um das Schraubglied zu verschließen, und eine Öffnungsposition, in der der Verriegelungsring (2) von dem ersten Ende des Körpers (1) beabstandet ist, um ein offenes Glied mit einer Öffnungslänge entlang der Gleitachse des Verriegelungsrings (2) gemessen zu definieren;
- einen Verschluss (3),
**dadurch gekennzeichnet, dass**
- der Verschluss (3) in Bezug auf den Körper (1) abnehmbar montiert ist, wobei der Verschluss (3) ein erstes Ende aufweist, das an dem zentralen Abschnitt (1b) durch ein Befestigungsmittel (4) befestigt ist, und ein zweites gegenüberliegendes Ende aufweist, das an dem Verriegelungsring (2) oder dem Körper (1) durch ein Blockierungssystem (5) zusammenwirkt, wobei das Befestigungsmittel (4) eine Drehung des Verschlusses (3) in Bezug zu dem Körper (1) gestattet, wobei das Blockierungssystem (5) vor dem Körper (1) und/oder dem Verriegelungsring (2) zusammenwirkt, um die Drehung zu verhindern,
- das Befestigungsmittel (4) und das Blockierungssystem (5) unabhängig durch einen Ring oder einen Haken gebildet sind,
- das Blocksicherungssystem (5) eine Länge besitzt, die kleiner ist als die Öffnungslänge entlang der Gleitachse, um die Drehung des Verschlusses (3) zwischen dem Verriegelungsring und dem ersten Ende des Körpers zu gestatten, wenn der Verriegelungsring (2) in der Öffnungsposition ist, und zwei Blockierelemente, die voneinander beabstandet sind, um Anschläge zu bilden, die die Drehung des Verschlusses (3) verhindern, wenn der Verriegelungsring (2) in der Verschlussposition ist.

2. Schnellverschlussglied nach Anspruch 1, **dadurch gekennzeichnet, dass** das Blockierungssystem (5) und das Befestigungsmittel (4) jeweils aus einem Ring gebildet sind.

3. Schnellverschlussglied nach dem vorstehenden Anspruch, wobei der Verschluss (3) einen ersten Ring definiert, der einen Schnitt aufweist, der das Einsetzen des Körpers (1) gestattet und das Einsetzen des Verriegelungsrings (2) untersagt, und einen zweiten Ring, der das Einsetzen des Verriegelungsrings (2) gestattet.

4. Schnellverschlussglied nach Anspruch 1, **dadurch gekennzeichnet, dass** das Blockierungssystem (5) und das Befestigungsmittel (4) jeweils aus einem Haken gebildet sind.

5. Schnellverschlussglied nach einem der vorstehenden Ansprüche, **dadurch gekennzeichnet, dass** der Verschluss (3) in Verschiebung entlang der Gleitrichtung des Verriegelungsrings (2) beweglich montiert ist.

6. Schnellverschlussglied nach einem der vorstehenden Ansprüche, **dadurch gekennzeichnet, dass** das Blockierungssystem (5) den Verriegelungsring (2) gemäß der Gleitrichtung des Verriegelungsrings (2) teilweise abdeckt.

7. Schnellverschlussglied nach einem der vorstehenden Ansprüche, **dadurch gekennzeichnet, dass** der Verschluss (3) einen Schaft aufweist, der zu einem der gekrümmten Abschnitte des Körpers (1) gerichtet ist und aus dem Befestigungsmittel (4) und dem Blockierungssystem (5) vorragt.

8. Schnellverschlussglied nach einem der vorstehenden Ansprüche, wobei der Verschluss (3) einen Blockierungsanschlag definiert, der dazu konfiguriert ist, die Verlagerung des Verriegelungsrings (2) entlang der Gleitachse zu blockieren, wobei der Blockierungsanschlag zwischen dem Befestigungsmittel (4) und dem Blockierungssystem (5) angeordnet ist und sich parallel zu der Gleitachse erstreckt.

## Claims

1. Quick link comprising:
- a body (1) defining an open link with opposite first and second ends, the body (1) comprising a central portion (1b) separating two curved portions (1a);
- a locking ring (2) fitted rotating and sliding with respect to the body (1), the locking ring (2) defining a closed position connecting the opposite first and second ends of the body (1) to close the quick link and an open position in which the locking ring (2) is separated from the first end of the body (1) to define an open link with an opening length measured along the sliding axis of the locking ring (2);
- a shutter;
quick link **characterized in that**
- the shutter (3) fitted removable with respect to the body (1), the shutter (3) having a first end fixed to the central portion (1b) by an attachment means (4) and having an opposite second end collaborating with the locking ring (2) or with the body (1) by means of a blocking system (5), the attachment means (4) allowing rotation of the shutter (3) with respect to the body (1), the blocking system (5) collaborating with the body (1) and/or the locking ring (2) to prevent said rotation
- the attachment means (4) and the blocking system (5) are formed independently by a ring or a hook,
- the blocking system (5) has a length smaller than the opening length along the sliding axis to allow rotation of the shutter (3) between the locking ring and the first end of the body (1) when the locking ring (2) is in the open position and two blocking members spaced apart from one another to form stops preventing rotation of the shutter (3) when the locking ring (2) is in the closed position.

2. Quick link according to claim 1, **characterized in that** the blocking system (5) and attachment means (4) are both formed by a ring.

3. Quick link according to the preceding claim, wherein the shutter (3) defines a first ring having a section allowing insertion of the body (1) and preventing insertion of the locking ring (2) and a second ring allowing insertion of the locking ring (2).

4. Quick link according to claim 1, **characterized in that** the blocking system (5) and the attachment means (4) are both formed by a hook.

5. Quick link according to anyone of the preceding claims, **characterized in that** the shutter (3) is fitted movable in translation in the sliding direction of the locking ring (2).

6. Quick link according to anyone of the preceding claims, **characterized in that** the blocking system (5) partially covers the locking ring (2) in the sliding direction of the locking ring (2).

7. Quick link according to anyone of the preceding claims, **characterized in that** the shutter (3) has a rod directed towards one of the curved portions of the body (1) and salient from the attachment means (4) and from the blocking system (5).

8. Quick link according to anyone of the preceding claims, wherein the shutter (3) defines a block stop configured to prevent movement of the locking ring (2) in the sliding direction, the block stop being arranged between the attachment means (4) and the blocking system (5) and extending parallel to the sliding axis.
